# EUROPÄISCHE PATENTSCHRIFT

(11) **EP 2 768 655 B1**
(45) Veröffentlichungstag und Bekanntmachung des Hinweises auf die Patenterteilung: **05.08.2015**
(21) Anmeldenummer: 13777296.8
(22) Anmeldetag: 17.10.2013
(51) Int. Cl.: B32B 1/08, B32B 27/12, F16L 55/165, B29C 63/34, B29L 23/00

(54) **AUSKLEIDUNGSSCHLAUCH, REHABILITIERTES DRUCKROHR UND VERFAHREN ZUM REHABILITIEREN EINES DRUCKROHRS**
LINING TUBE, RENOVATED PRESSURE PIPE AND METHOD FOR RENOVATING A PRESSURE PIPE
REVÊTEMENT INTÉRIEUR TUBULAIRE, TUYAU À PRESSION REMIS EN ÉTAT, ET PROCÉDÉ DE REMISE EN ÉTAT D'UN TUYAU À PRESSION

(30) Priorität: 18.10.2012 EP 12075119
(43) Veröffentlichungstag der Anmeldung: 27.08.2014
(73) Patentinhaber: Schwert, Siegfried, 14195 Berlin (DE); Odenwald, Ralf, 16727 Velten (DE)
(72) Erfinder: Schwert, Siegfried, 14195 Berlin (DE); Odenwald, Ralf, 16727 Velten (DE)
(74) Vertreter: Pfenning, Meinig & Partner GbR
(86) Internationale Anmeldenummer: PCT/EP2013/071799
(87) Internationale Veröffentlichungsnummer: WO 2014/060558

(56) Entgegenhaltungen:
- EP-A1- 0 205 621
- EP-A2- 0 351 570
- EP-A2- 0 454 309
- WO-A1-00/25057
- WO-A1-01/18444
- WO-A1-2006/061129
- WO-A2-00/15992
- DE-A1- 19 910 490
- US-A- 5 653 555
- US-A1- 2003 138 298

## Beschreibung

Gegenstand der vorliegenden Erfindung ist ein Auskleidungsschlauch zum Auskleiden eines zu sanierenden Druckrohrs, ein unter Verwendung eines solchen Auskleidungsschlauchs rehabilitiertes Druckrohr sowie ein Verfahren zum Rehabilitieren eines Druckrohrs unter Verwendung eines entsprechenden Auskleidungsschlauchs. Das Hauptanwendungsgebiet sind Druckleitungen, in denen ein Fluid, wie z.B. Erdgas oder Wasser, gegebenenfalls unter hohem Druck transportiert wird.

Es ist bekannt, beschichtete Schläuche zur Auskleidung und Sanierung eines Druckrohrs durch Reversieren oder Einziehen in das Altrohr einzubringen, wobei eine nach dem Einbringen außen liegende Oberfläche des Schlauches mit einer Innenwand des auszukleidenden Altrohrs verklebt wird. Schläuche dieser Art sind beispielsweise den Druckschriften WO 00/25057 A1 und DE 199 10 490 A1 zu entnehmen.

Derartige Schläuche sind in der Lage, Leckagen undicht gewordener Druckrohre zu beheben. Auf diese Weise sanierte Rohre können jedoch nur dann auch hohe Drücke aufnehmen, wenn das Altrohr selbst noch hinreichend hohe mechanische Belastungen aufzunehmen in der Lage ist und der Schlauch fest an der Innenseite des zu sanierenden Druckrohrs anliegt und somit mechanische Unterstützung durch das Altrohr erfährt. Aufgrund starker flächenmäßiger Korrosion oder anderweitiger Rohrschwächung kommt es jedoch vor, dass eine bestehende Rohrleitung den hohen Transportdrücken des Mediums sowie äußeren Lasten nicht mehr gewachsen ist. Die Druckschrift EP 0 205 621 A1 offenbart einen Auskleidungsschlauch, der in ausgehärtetem Zustand zumindest in begrenztem Umfang auch mechanische Lasten aufzunehmen in der Lage ist. Dennoch kann nicht ausgeschlossen werden, dass ein mit einem solchen Auskleidungsschlauch saniertes Druckrohr hinreichend hohe Drücke aufnehmen und äußere mechanische Belastungen aushalten kann, wenn das Altrohr zu sehr geschwächt ist. Herkömmliche Sanierungsmethoden sehen daher für diesen Fall vor, innerhalb der zu sanierenden Druckrohrleitung ein neues selbsttragendes Rohr einzuziehen bzw. die gesamte Druckrohrleitung in offener Bauweise auszuwechseln, was im Normalfall einen beträchtlichen Mehraufwand mit sich bringt.

Aufgabe der vorliegenden Erfindung ist es, das vorgenannte Problem zu lösen und eine Maßnahme vorzuschlagen, die eine in ihren statischen Eigenschaften geschwächte Druckrohrleitung mit möglichst geringem Aufwand zu rehabilitieren erlaubt, auch wenn die Druckrohrleitung unter Umständen nicht gerade verläuft. Dabei soll die rehabilitierte Druckrohrleitung alle betriebsbedingt auftretenden mechanischen Belastungen unabhängig davon aushalten können, wie sehr sie zuvor geschwächt war.

Diese Aufgabe wird gelöst mittels eines Auskleidungsschlauchs gemäß dem Hauptanspruch sowie durch ein Druckrohr mit den Merkmalen des Anspruchs 12, welches mittels eines derartigen Auskleidungsschlauchs, der ein neues Rohr im Altrohr bildet, hergestellt wird, und durch ein Verfahren zur Verwendung eines erfindungsgemäßen Auskleidungsschlauchs gemäß mit den Merkmalen des Anspruchs 13. Spezielle Ausführungsformen und Weiterbildungen ergeben sich mit den Merkmalen der Unteransprüche.

Der vorgeschlagene Auskleidungsschlauch zum Auskleiden eines zu sanierenden Druckrohres umfasst zumindest eine erste Schicht und eine an die erste Schicht angrenzende zweite Schicht, wobei die erste Schicht eine fluiddichte und/oder gasdichte Diffusionssperre bildet und wobei die zweite Schicht ein mit einem Harz getränktes textiles Flächengebilde ist und für eine fugenlose und vollflächige kraftschlüssige Klebeverbindung mit einer inneren Oberfläche des zu sanierenden Druckrohrs eingerichtet ist, wobei der Auskleidungsschlauch in einem Zustand, in dem das Harz nicht ausgehärtet ist, flexibel ist. Dabei hat die zweite Schicht eine Dicke von mindestens 3 mm, wobei das textile Flächengebilde und das Harz so gewählt sind, dass der Auskleidungsschlauch in einem Zustand, in dem das Harz ausgehärtet ist, ein selbsttragendes Rohr bildet, wobei die zweite Schicht als statisch wirksame Schicht dieses selbsttragenden Schlauchs fungiert.

Die Erfindung ermöglicht es, zu sanierende Druckrohre in besonders einfacher Weise mit einem selbsttragenden Rohr auszukleiden, wobei es unschädlich ist, wenn das zu sanierende Druckrohr Richtungsänderungen aufweist. Als Druckrohr seien dabei Rohrleitungen bezeichnet, die - anders als Freispiegelleitungen oder Gefälleleitungen - zum Transport von flüssigen oder gasförmigen Medien unter Druck ausgelegt sind und typischerweise mindestens zur in der DIN-Norm 16868-1 definierten Nenndruckklasse PN1 gehören. Da der Auskleidungsschlauch vor dem Aushärten des Harzes flexibel ist, kann es sich an die Kontur des zu sanierenden Druckrohres anpassen, wenn es in das zu sanierende Druckrohr eingebracht wird. Nach der anschließenden Aushärtung des Harzes bildet er in vorteilhafter Weise die Erzeugung ein selbsttragendes Rohr, so dass man ein saniertes Druckrohr erhält, das auch dann hinreichend stabil und mechanisch belastbar ist, wenn das alte Rohr, das nur noch als Form gedient hat, so geschwächt ist, dass es keine Belastungen mehr aufzunehmen in der Lage ist. Hierdurch vereinfacht sich die Sanierung insbesondere von stark geschwächten Altrohren, die dadurch mit sehr geringem Aufwand in hoher Qualität saniert und deren Lebensdauer so beträchtlich analog einer neuen Rohrleitung erhöht werden kann. Ein besonderer Vorteil ergibt sich dabei dadurch, dass in einem einzigen Arbeitsgang sowohl die mechanische Belastbarkeit wiederhergestellt werden kann als auch Leckagen behoben werden können. Die Sanierung in nur einem Arbeitsgang reduziert dabei nicht nur den für den Rehabilitationsprozess erforderlichen Aufwand, sondern erhöht auch die Ausführungsqualität, weil dabei keine übermäßigen Querschnittsverminderungen auftreten, die bei einer Sanierung in mehreren Arbeitsschritten, d.h. mittels zweier Schläuche in zwei Arbeitsgängen, kaum vermeidbar wären, insbesondere bei Richtungsänderungen. Trotz des Querschnittsverlusts, der bei Verwendung des vorliegenden Auskleidungsschlauchs ohnehin nur gering ist, wird aufgrund der glatten Oberflächenstruktur der Mediendurchsatz in der Regel nicht reduziert.

Das textile Flächengebilde kann z.B. ein Gewebe oder ein Gewirke oder ein Gestrick oder ein Gelege - im letztgenannten Fall vorzugsweise ein Multiaxialgelege - sein oder eine Matte, die z.B. durch eine Kombination der genannten Materialarten gebildet sein kann. In jedem Fall ist es ein zumindest überwiegend aus Fasern gebildetes flächiges Material, das zusammen mit dem Harz nach dessen Aushärten einen faserverstärkten Kunststoff bildet, der dem selbsttragenden Rohr, das der Auskleidungsschlauch nach dem Aushärten bildet, die geforderten statischen Eigenschaften, also die erforderliche Steifigkeit, verleiht. Die Fasern dienen also nicht nur als Harzträger, wie es der Fall wäre, wenn sie ihrerseits aus einem dem Harz entsprechenden Material oder einem ähnlichen Kunstharz gebildet wären. Vielmehr handelt es sich bei den Fasern um eine echte Verstärkung, durch die der aus dem Harz und dem textilen Flächengebilde gebildete faserverstärkte Kunststoff eine höhere Zugbelastbarkeit hat, als es das Harz nach dem Aushärten ohne die Fasern hätte. Dabei kann das textile Flächengebilde z.B. aus Glasfasern oder Kohlefasern gebildet sein.

Bei dem Harz handelt es sich um ein ungesättigtes Polyesterharz oder ein ungesättigtes Vinylesterharz oder um ein Harz, das ein ungesättigtes Polyesterharz oder ein ungesättigtes Vinylesterharz enthält. Vorzugsweise bildet das ungesättigte Polyesterharz oder das ungesättigte Vinylesterharz dabei den überwiegenden Teil des Harzes. In einer weiter unten noch ausführlicher beschriebenen Ausführung ist das Harz durch eine Mischung aus einer ersten Komponente und einer zweiten Komponente gegeben, wobei es sich bei der ersten Komponente um das Vinylesterharz oder das Polyesterharz mit einem Mischungsanteil von zwischen 50% und 95% handelt. Durch derartige Duroplaste lässt sich die nötige Stabilität des aus dem Auskleidungsschlauch nach dem Aushärten gebildeten Rohrs mit verhältnismäßig geringen Materialkosten realisieren. Dabei kann das Harz styrolhaltig oder styrolfrei sein. Die Verwendung eines styrolfreien Harzes ist dabei aus Gründen des Umwelt- und Arbeitsschutzes vorteilhaft. Ein Harzanteil der aus dem Harz und dem textilen Flächengebilde gefertigten zweiten Schicht kann z.B. zwischen 30% und 70% betragen.

Durch eine bestimmungsgemäße Verwendung eines Auskleidungsschlauchs hier vorgeschlagener Art erhält man vergleichsweise einfach ein in vorteilhaft guter Qualität rehabilitiertes Druckrohr. Dabei umfasst das rehabilitierte Druckrohr ein Altrohr sowie ein innerhalb des Altrohrs angeordnetes und durch eine vollflächige Klebeverbindung mit einer Innenwand des Altrohrs verbundenes selbsttragendes Rohr, wobei das selbsttragende Rohr aus dem Auskleidungsschlauch, also einem Verbundschlauch, gebildet ist.

Mit der vorliegenden Erfindung wird dementsprechend auch ein Verfahren zum Rehabilitieren eines Druckrohrs unter Verwendung eines Auskleidungsschlauchs der hier beschriebenen Art vorgeschlagen. Dieses Verfahren umfasst das Einbringen des Auskleidungsschlauchs, der typischerweise bereits werkseitig mit dem Harz getränkt ist, in das Altrohr, was in einem einzigen Arbeitsschritt geschehen kann. Dann öder dabei wird eine Haftverbindung zwischen dem Auskleidungsschlauch und einer Innenwand des Altrohr hergestellt, was z.B. dadurch geschehen kann, dass der Auskleidungsschlauch aufgeblasen und dadurch zumindest quasi vollflächig mit der Innenwand des Altrohrs in Kontakt gebracht wird. Die Haftverbindung wird dabei entweder durch Klebstoff einer optional vorgesehenen zusätzlichen Klebstoffschicht vermittelt oder durch das Harz der zweiten Schicht selbst, das in diesem Fall zusätzlich zu dem Polyesterharz oder dem Vinylesterharz selbst einen Klebstoff enthält. Schließlich sieht das Verfahren ein Aushärten des Harzes vor, so dass der Auskleidungsschlauch ein vollflächig klebend mit dem Altrohr verbundenes selbstragendes Rohr bildet. Die Klebeverbindung sei dabei auch dann noch als vollflächig bezeichnet, wenn der Auskleidungsschlauch an vergleichsweise wenigen Stellen, an denen das Druckrohr Richtungsänderungen aufweist, Falten wirft. Zumindest in geraden Abschnitten des Druckrohres liegt der Auskleidungsschlauch bzw. das daraus gebildete selbsttragende Rohr jedoch fugenlos am Altrohr an.

Das Einbringen des Auskleidungsschlauchs in das Altrohr kann z.B. durch Reversieren geschehen. Der Schlauch kann also durch Umstülpen bzw. Umkrempeln, beispielsweise mit Hilfe einer Drucktrommel, in das zu sanierende Druckrohr hinein reversiert werden, bevor das Harz aushärtet und der Auskleidungsschlauch das selbsttragende Rohr bildet.

Das selbsttragende Rohr, das der Auskleidungsschlauch zu bilden geeignet ist, hat eine in der DIN-Norm 16868-1 definierte Nennsteifigkeit von mindestens SN 630 oder eine Nominalsteifigkeit oder Ringsteifigkeit von mindestens 630 N/m². Dabei ist der Auskleidungsschlauch wohlgemerkt in der Lage, ein selbsttragendes Rohr dieser Steifigkeit auch ohne stützendes Altrohr zu bilden, also insbesondere unabhängig von irgendeiner verbleibenden tragenden Funktion des Altrohrs, die je nach Zustand des Altrohrs mehr oder weniger vorhanden und unter Umständen vernachlässigbar sein kann. Als selbsttragend sei im vorliegenden Zusammenhang ein Rohr also insbesondere dann bezeichnet, wenn es eine nominale Nennsteifigkeit oben angegebener Größe von mindestens 630 N/m² hat. Das aus dem Auskleidungsschlauch bildbare selbsttragende Rohr kann natürlich je nach Ausführung, insbesondere abhängig von der Wandstärke, unter Umständen auch eine deutlich größere Nennsteifigkeit von z.B. bis zu SN 10000 haben und bei Nenndrücken über 25 bar auch darüber hinausgehend.

Die Dicke der zweiten Schicht des Auskleidungsschlauchs kann dazu z.B. zwischen 3 mm und 20 mm oder zwischen 4 mm und 20 mm betragen. Auf diese Weise kann der Auskleidungsschlauch so ausgestaltet sein, dass das daraus gebildete selbsttragende Rohr nach dem Aushärten des Harzes auch ohne Unterstützung durch ein Altrohr je nach Auslegung Drücke von zumindest 0,5 bar oder 1 bar oder auch bis beispielsweise 25 bar oder bei entsprechender Wahl und Anordnung der Fasern und der statisch erforderlichen Schlauchdicke sogar 50 bar aufnehmen kann und dabei dicht bleibt. Das aus dem Auskleidungsschlauch gebildete selbsttragenden Rohr kann so Belastungen, wie sie beispielsweise durch Erdlasten, Grundwasser oder Verkehrslasten bzw. die innen am Druckrohr anliegenden Betriebsdrücke bzw. auch Unterdrücke (Vakuum)auftreten, aufnehmen, und zwar auch dann, wenn das Altrohr keine mechanische Unterstützung mehr leisten kann.

Der Auskleidungsschlauch kann so ausgeführt werden, dass die zur Bildung einer inneren Oberfläche des sanierten Druckrohres vorgesehene erste Schicht außerhalb der zweiten Schicht angeordnet ist, so dass der Ausklei-dungsschlauch zum Einbringen in das zu sanierende Druckrohr durch Reversieren geeignet ist. Andere Ausführungen sehen vor, dass die zur Bildung der inneren Oberfläche des sanierten Druckrohres vorgesehene erste Schicht innerhalb der zweiten Schicht angeordnet ist, so dass der Auskleidungsschlauch zum Einbringen in das zu sanierende Druckrohr durch Einziehen geeignet ist.

Das Harz kann z.B. so gewählt werden, dass es beim Tränken des textilen Flächengebildes eine Viskosität von zwischen 500mPa oder 600mP und 25000mPa aufweist. Bei einer solchen Viskosität kann das Harz einfach mit dem textilen Flächengebilde in Verbindung gebracht und gleichmäßig darin verteilt werden. Vorzugsweise ist das Harz eindickbar. Insbesondere kann es vorteilhaft sein, wenn das Harz ein Eindickungsmittel enthält, so dass es nach dem Tränken des textilen Flächengebildes eindickt und dann bei einer Temperatur von 20°C z.B. eine Viskosität von zwischen 100000 mPas und 500000 mPas oder zwischen 75000 mPas und 750000 mPas hat. Als Eindickungsmittel kann ein anorganischer Stoff, wie z.B. Magnesiumoxid, verwendet werden. Eine zum Eindicken führende chemische Reaktion kann dabei durch Wärme beschleunigt werden. Durch das Eindicken des - dabei noch nicht aushärtenden - Harzes kann ein Verfließen innerhalb des textilen Flächengebildes oder ein Auslaufen aus der zweiten Schicht, z.B. aufgrund eines Gefälles, verhindert werden. Das erlaubt eine problemlose Lagerung und einen Transport des Auskleidungsschlauchs. Daher eignet sich der Auskleidungsschlauch in dieser Ausführung besonders gut für eine Vorbereitung fernab des Einsatzortes, so dass der Aufwand an der Baustelle selbst ausgesprochen gering gehalten werden kann. Insbesondere ist es nicht erforderlich, das textile Flächengebilde erst am eigentlichen Einsatzort mit dem Harz zu tränken. Eine Tränkung am Einsatzort kann aber unter bestimmten Umständen sinnvoll sein und sei daher nicht ausgeschlossen.

Zur Vermittlung der klebenden Verbindung des Auskleidungsschlauchs mit dem zu sanierenden Druckrohr ist ein Acrylharz oder ein Epoxidharz als Klebstoff vorgesehen. Der Klebstoff kann auf einer der ersten Schicht abgewandten Oberfläche der zweiten Schicht eine Klebstoffschicht auf die zweite Schicht aufgetragen sein, wobei die Klebstoffschicht in einem ausgehärteten Zustand eine klebende Verbindung zwischen dem selbsttragenden Rohr und einer Innenseite des zu sanierenden Druckrohres zu vermitteln geeignet ist. Sofern der Auskleidungsschlauch durch Reversieren in das Altrohr eingebracht werden soll, kann die Klebstoffschicht hergestellt werden, indem der Klebstoff in den Auskleidungsschlauch eingefüllt und auf der zunächst innen liegenden Oberfläche verteilt wird, beispielsweise, indem der Auskleidungsschlauch durch ein Walzenpaar mit definiertem Spalt gezogen wird. Zum Einfüllen des Klebstoffs kann es dabei unter Umständen erforderlich sein, aufeinanderliegende Lagen des Auskleidungsschlauchs auseinanderzuziehen oder den Auskleidungsschlauch hierfür aufzublasen. Bei dem Klebstoff zur Bildung der Klebstoffschicht handelt es sich wie gesagt um ein Acrylharz oder ein Harz auf Basis von Epoxiden bzw. ein Epoxidharz. Insbesondere kommt als Klebstoff das aus anderem Zusammenhang bekannte starline^{®}EXPRESS-Harz in Frage. Das Aufbringen der Klebstoffschicht kann unter Umständen erst am Einsatzort, also auf der Baustelle geschehen, auch wenn das Tränken der zweiten Schicht mit dem Harz und das Verbinden der ersten und der zweiten Schicht unter Umständen viel früher und vorzugsweise vor einem Transport zum Einsatzort erfolgt.

Bei anderen Ausführungen kann auch das Harz, mit dem das textile Flächengebilde der zweiten Schicht getränkt wird, selbst zusätzlich zu dem Polyesterharz oder dem Vinylesterharz den Klebstoff enthalten und dadurch selbst so gewählt sein, dass es im ausgehärteten Zustand eine klebende Verbindung zwischen dem selbsttragenden Rohr und einer Innenseite des zu sanierenden Druckrohres zu vermitteln geeignet ist. In diesem Fall ist das Harz also eine Mischung aus einem zur Bildung eines selbstragenden Rohrs geeigneten und zumindest überwiegend aus Polyesterharz oder Vinylesterharz gebildeten Harz und dem Klebstoff, wobei der Klebstoff auch in diesem Fall ein Acrylharz oder ein Epoxidharz ist. Die Mischung kann dabei durch Mischen des erstgenannten Harzes und des Klebstoffs in flüssiger Form hergestellt werden oder z.B. durch Einrühren von Kügelchen, in denen der Klebstoff eingeschlossen ist und die beispielsweise Wachshüllen haben können. In diesen Fällen kann ein Teil des Harzes beim Sanieren des Altrohrs aus der zweiten Schicht nach außen austreten und somit beim Einbringen des Auskleidungsschlauchs das zu sanierende Druckrohr eine fugenlose kraftschlüssige und vollständige Verklebung mit dem zu sanierenden Druckrohr bewirken. In Abhängigkeit vom Material des zu sanierenden Druckrohres wird das Harz dann derart gewählt, dass es nicht nur das selbsttragende Rohr erzeugt, sondern auch eine klebende Verbindung zwischen dem selbsttragenden Rohr und dem zu sanierenden Druckrohr vermittelt. Die durch das Vinylesterharz oder Polyesterharz gebildete Komponente des Harzes kann in diesem Fall z.B. einen Massenanteil von zwischen 50% und 95% ausmachen, während der Klebstoff typischerweise einen Massenanteil von mindestens 5% des Harzes bildet.

Durch das Verkleben mit dem zu sanierenden Druckrohr wird z.B. verhindert, dass Gashinterwanderungen zwischen dem selbsttragenden Rohr und dem zu sanierenden Druckrohr stattfinden können. Derartige Gashinterwanderungen können in Hohlräumen gleich welcher Art explosive Gemische bilden, was aus Gründen der Explosionssicherheit verhindert werden muss. Bei Trinkwasser könnten bei einer Nichtverklebung mit dem Altrohr z.B. im Bereich von Anbohrungen (für Hausanschlüsse) dann Krankheitskeime von außen (im Bereich kontaminierter Böden) in die Leitung eindringen, und zwar insbesondere in vorübergehend außer Betrieb befindliche Leitungen. Andererseits könnten wiederum Wasserverluste entstehen, die doch durch die Rehabilitation ausgeschlossen werden sollen.

Die erste Schicht, die die Diffusionssperre bildet und dem rehabilitierten Druckrohr die nötige Dichtigkeit verleihen können soll, kann insbesondere für das Harz undurchlässig sein oder eine für das Harz undurchlässige Lage umfassen. Dabei kann die erste Schicht auf verschiedene Weisen gebildet werden.

So kann die erste Schicht des mehrschichtigen Auskleidungsschlauchs z.B. ihrerseits ein Verbund sein, der eine diffusionsarme Folie sowie an einer der zweiten Schicht zugewandten Seite der Folie eine faserhaltige Lage umfasst. Die faserhaltige Lage kann wieder z.B. ein Gewebe oder ein Gewirke oder ein Gelege oder ein Gestrick sein. Wie das textile Flächengebilde der zweiten Schicht kann auch die faserhaltige Lage dabei z.B. aus Glasfasern oder Kohlefasern gebildet sein oder Glas- oder Kohlefasern enthalten. Alternativ kann die faserhaltige Lage der ersten Schicht auch z.B. aus Polyester gebildet sein. Eine Verbindung zwischen der faserhaltigen Lage und der Folie kann z.B. dadurch realisiert sein, dass die Folie auf die faserhaltige Lage aufextrudiert oder die Folie z.B durch Anschmelzen der Folie auf die faserhaltige Lage aufkaschiert ist. Im letztgenannten Fall kann die faserhaltige Lage durch einzelne Fasern gebildet werden, die in zufällig verteilten Orientierungen auf der Folie zu liegen kommen und ein Vlies bilden und dazu z.B. auf die oberflächlich angeschmolzene Folie gesaugt werden können.

Angaben dazu, wie die als eigentliche Diffusionssperre dienende Folie hergestellt werden kann und was für besondere Eigenschaften sie haben kann, sowie Details bezüglich der die Diffusionssperre tragenden faserhaltigen Lage können beispielsweise den Druckschriften WO 00/25057 A1 und WO 00/15992 A2 entnommen werden. Dort sind vergleichbare Diffusionssperren in einem anderen Zusammenhang beschrieben. Zur Bildung der ersten Schicht als Verbund beschriebener Art kann insbesondere der aus dem starline ^{®}EXPRESS-Verfahrens bekannte Schlauch verwendet werden. In diesem Fall kann der Auskleidungsschlauch gebildet werden, indem der Schlauch aus dem starline ^{®}EXPRESS-Verfahrens an einer der Diffusionssperre gegenüberliegenden Seite mit dem seierseits schlauchförmigen textilen Flächengebilde verbunden wird, das dann zusammen mit der faserhaltigen Lage des die erste Schicht bildenden Schlauchs mit dem Harz getränkt wird.

Die Ausführung der ersten Schicht als Verbund dieser Art Anordnung kann die Herstellung des Auskleidungsschlauchs und die Verbindung der ersten Schicht mit der zweiten Schicht erleichtern. Es sind aber auch Ausführungen möglich, bei denen die erste Schicht nur durch eine direkt mit der zweiten Schicht verbundene Folie gebildet wird.

Die erste Schicht kann durch das Harz, mit dem das textile Flächengebilde der zweiten Schicht getränkt ist, mit der zweiten Schicht verbunden sein. Dazu kann das Harz einen Teil der ersten Schicht, z.B. die genannte faserhaltige Lage der ersten Schicht, durchdringen.

Es ist günstig, wenn das Harz, mit dem das textile Flächengebilde getränkt ist, kein selbsthärtendes Harz ist, sondern chemisch oder elektromagnetisch aktiviert wird, um eine Aushärtung herbeizuführen. Auf diese Weise wird gewährleistet, dass der Auskleidungsschlauch lagerfähig ist und möglicherweise schon lange vor den eigentlichen Sanierungsarbeiten hergestellt werden kann - unter Umständen mit Ausnahme der eventuell erst am Einsatzort aufgebrachten Klebstoffschicht - und so zum Einsatzort transportiert werden kann, dass die Sanierung dort in einem einzigen Arbeitsgang geschehen kann. Insbesondere kann das Harz ein durch UV-Strahlung oder andere elektromagnetische Strahlung, insbesondere durch Licht im UV-nahen Bereich, härtbares Harz sein. So kann sichergestellt werden, dass das Aushärten erst innerhalb des zu sanierenden Druckrohres ausgelöst wird. Vorrichtungen zum Einbringen entsprechender aktivierender Strahlung in zu sanierende Druckrohre sind aus anderem Zusammenhang an sich bekannt. Es wird in der Regel genügen, eine UV-Lampe oder andere Strahlungsquelle durch den in das Altrohr eingebrachten Schlauch zu führen. Wenn nicht das Harz aus der zweiten Schicht, sondern eine zusätzliche Klebstoffschicht für die Verbindung des Auskleidungsschlauchs mit dem Altrohr vorgesehen ist, kann auch diese Klebstoffschicht durch die gleiche oder ähnliche Strahlung, also insbesondere z.B. durch UV-Strahlung aktivierbar sein. Durch diesen beschleunigten Aushärtungsprozess wird auch eine geringstmögliche Außerbetriebnahmezeit der Druckrohrleitung gewährleistet.

Zusammenfassend kann der vorgeschlagene Auskleidungsschlauch zum Auskleiden eines zu sanierenden Druckrohres als zumindest eine erste Schicht und eine an die erste Schicht angrenzende zweite Schicht umfassend beschrieben werden, wobei die erste Schicht eine fluiddichte und/oder gasdichte Diffusionssperre bildet und wobei die zweite Schicht ein mit einem Harz getränktes textiles Flächengebilde ist, eine Dicke von mindestens 3 mm hat und für eine fugenlose und vollflächige kraftschlüssige Klebeverbindung mit einer Innenwand des zu sanierenden Druckrohrs eingerichtet ist, wobei der Auskleidungsschlauch in einem Zustand, in dem das Harz nicht ausgehärtet ist, flexibel ist und wobei das textile Flächengebilde und das Harz so gewählt sind, dass der Auskleidungsschlauch in einem Zustand, in dem das Harz ausgehärtet ist, ein selbsttragendes Rohr bildet. Dabei bildet das textile Flächengebilde zusammen mit dem Harz einen faserverstärkten Kunststoff, wobei das Harz ein ungesättigtes Polyesterharz oder ein ungesättigtes Vinylesterharz ist oder enthält, wobei zusätzlich ein Acrylharz oder Epoxidharz als Klebstoff vorgesehen ist, der entweder als Klebstoffschicht, die in einem ausgehärteten Zustand eine klebende Verbindung zwischen dem selbsttragenden Rohr und einer Innenseite des zu sanierenden Druckrohres zu vermitteln geeignet ist, auf einer der ersten Schicht abgewandten Oberfläche der zweiten Schicht aufgetragen ist oder der zusammen mit dem Polyesterharz oder Vinylesterharz als Mischung das Harz bildet, mit dem das textile Flächengebilde der zweiten Schicht getränkt ist. Vorzugsweise ist das Harz dabei eindickbar. Es kann also ein Eindickungsmittel enthalten, so dass das textile Flächengebilde bei der Herstellung des Auskleidungsschlauchs mit dem Harz getränkt werden kann, wenn dieses noch wesentlich flüssiger ist als nach dem Eindicken, das natürlich erst anschließend erfolgen soll. Dadurch erhält es dann - noch vor dem eigentlichen Aushärten - eine deutlichere größere Viskosität als beim Tränken des textilen Flächengebildes, so dass ein Auslaufen des Harzes aus der zweiten Schicht oder eine unerwünschte Umverteilung innerhalb der zweiten Schicht durch Fließen verhindert wird. Dadurch kann der Auskleidungsschlauch problemlos gelagert oder transportiert werden.

Das mit dem Harz getränkte textile Flächengebilde kann so gelegt sein, dass es sich in einem längs des Auskleidungsschlauchs verlaufenden Streifen selbst überlappt, wobei zwei Ränder des textilen Flächengebildes dort nur übereinandergelegt, nicht jedoch miteinander vernäht sind. Dadurch können sich die einander überlappenden Ränder in Umfangsrichtung gegeneinander verschieben, so dass die zweite Schicht problemlos geweitet werden kann, ohne dass das textile Flächengebilde dazu in sich gedehnt werden müsste. Das kann ggf. beim Reversieren oder bei einem Aufweiten des Auskleidungsschlauchs innerhalb des Altrohrs hilfreich sein. Bei dem textilen Flächengebilde kann es sich unter Umständen um einen Komplex aus einem aus Glasfaser gebildeten Gewebe oder Gelege und einer Textilglasmatte handeln, wobei das Gewebe oder Gelege dann vorzugsweise so orientiert ist, dass die Glasfasern teilweise in Umfangsrichtung und teilweise in Längsrichtung liegen. Es kann vorgesehen sein, dass das Gewebe oder Gelege dabei pro Flächeneinheit mehr in Umfangsrichtung liegende Glasfasern als in Längsrichtung liegende Glasfasern aufweist.

Das mit dem Harz getränkte textile Flächengebilde kann auch seinerseits zwei, drei oder mehr Lagen umfassen, für die jeweils das im vorherigen Absatz zum textilen Flächengebilde Gesagte gilt. Jede dieser Lagen kann sich dann also jeweils in einem längs des Auskleidungsschlauchs verlaufenden Streifen selbst überlappen, wobei zwei Ränder der jeweiligen Lage dort nur übereinandergelegt sind, ohne vernäht zu sein. Die Lagen sind in diesem Fall vorzugsweise so gelegt, dass die genannten Streifen nicht übereinander, sondern in Umfangsrichtung an verschiedenen Stellen des Auskleidungsschlauchs liegen. Auch kann jede dieser Lagen in diesem Fall jeweils durch einen Komplex oben beschriebener Art gebildet sein.

Nachfolgend werden Ausführungsbeispiele der Erfindung anhand der Figuren näher erläutert. Es zeigt
- Fig. 1: einen Querschnitt durch einen Auskleidungsschlauch,
- Fig. 1A: einen Längsschnitt durch diesen Auskleidungsschlauch an der in Fig. 1 mit A-A bezeichneten Stelle,
- Fig. 2: eine Abwandlung des Auskleidungsschlauchs aus der Fig. 1 im Querschnitt,
- Fig. 3: eine Abwandlung des Auskleidungsschlauchs aus der Fig. 2 im Querschnitt,
- Fig. 4: eine andere Abwandlung des Auskleidungsschlauchs aus der Fig. 2 im Querschnitt,
- Fig. 5: einen Querschnitt durch einen Auskleidungsschlauch in einer anderen Ausführung,
- Fig. 5A: einen Längsschnitt durch den Auskleidungsschlauch aus Fig. 5 an der dort mit B-B bezeichneten Stelle,
- Fig. 6: einen Querschnitt durch ein rehabilitiertes Druckrohr, das unter Verwendung des Auskleidungsschlauchs aus den Figuren 1 und Fig. 1A oder aus einer der Figuren 2 bis 4 saniert ist, und
- Fig. 6A: einen Längsschnitt durch das rehabilitierte Druckrohr aus Fig. 6 an der dort mit C-C bezeichneten Stelle.

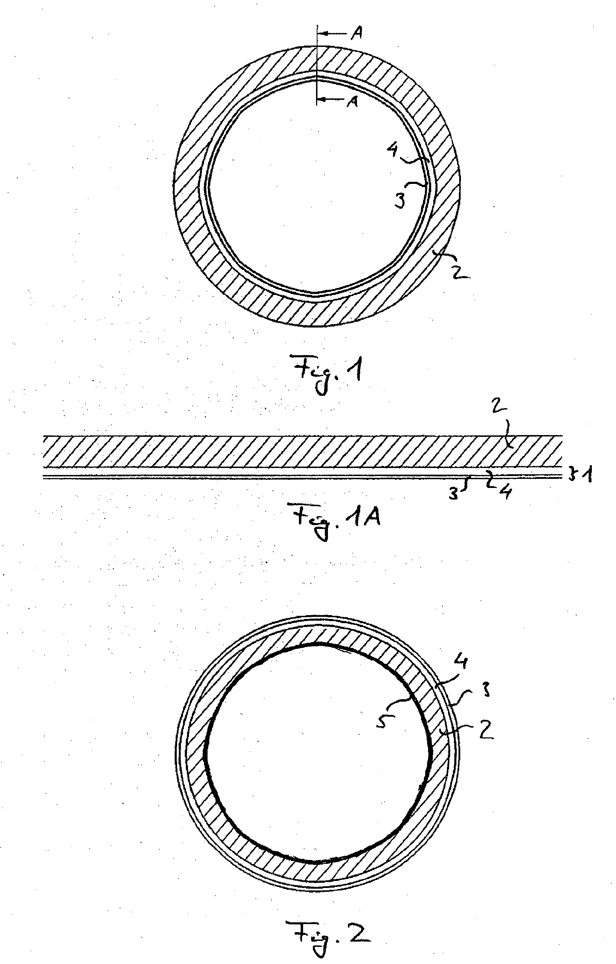

Der in den Figuren 1 und 1A gezeigte Auskleidungsschlauch weist eine erste Schicht 1 und eine die erste Schicht 1 umgebende zweite Schicht 2 auf. Dabei ist die erste Schicht 1 des mehrschichtigen Auskleidungsschlauchs, die eine Diffusionssperre bildet, im vorliegenden Ausführungsbeispiel als zweilagiger Verbund ausgeführt mit einer diffusionsarmen Folie 3 und einer faserhaltigen Lage 4, die zwischen der Folie 3 und der zweiten Schicht 2 liegt.

Die zweite Schicht 2 ist durch ein mit einem Harz getränktes textiles Flächengebilde gegeben, wobei das Harz nicht selbsthärtend ist, sondern erst nach Aktivierung durch elektromagnetische Strahlung, vorzugsweise UV-Licht, aushärtet. Dabei ist die zweite Schicht 2 mit einer Wandstärke von z.B. 5 mm so dick und das Harz so beschaffen, dass der zunächst flexible Auskleidungschlauch nach dem Aushärten dieses Harzes ein selbsttragendes Rohr einer Nominalsteifigkeit von weit über 630 N/m² oder einer Nennsteifigkeit von weit über SN 630 bildet. Dabei bildet das Harz nicht nur zusammen mit dem textilen Flächengebilde einen faserverstärkten Kunststoff, sondern stellt auch eine Verbindung mit der ersten Schicht 1 her, deren faserhaltige Lage 4 ebenfalls von dem Harz durchdrungen ist. Bei dem textilen Flächengebilde kann es sich z.B. um ein Gewebe oder Gelege oder Gestrick oder Gewirke handeln, dass z.B. vollständig oder überwiegend aus Glasfasern oder Kohlefasern gebildet ist.

Das Harz, mit dem das textile Flächengebilde der zweiten Schicht 2 getränkt ist, enthält überwiegend ein ungesättigtes Polyesterharze oder ein ungesättigtes Vinylesterharz. Dabei handelt es sich je nach Ausführung um ein styrolhaltiges oder styrolfreies Harz. Das Harz macht einen Gewichtsanteil von zwischen 30% und 70% der zweiten Schicht 2 aus. Das Harz, das beim Tränken des textilen Flächengebildes eine Viskosität von größenordnungsmäßig 10000 mPas hat, kann dabei mit einem Eindickungsmittel wie beispielsweise Magnesiumoxid versehen sein, so dass es anschließend - noch vor dem Aktivieren des Harzes - eingedickt wird, so dass es dann bei einer Temperatur von 20°C eine Viskosität von etwa 200000 mPas hat. In diesem Zustand ist der Auskleidungsschlauch nach wie vor flexibel und gut lagerbar und transportierbar.

Bei der faserhaltigen Lage 4 handelt es sich um einen Gewebeschlauch aus zumindest überwiegend aus Glasfasern oder Kohlefasern gebildeten Kett- und Schussfäden, auf den ein die Folie 3 bildendes Material aufextrudiert ist. Dabei kann die Folie 3, die eine Dicke von etwa 50 µm hat, z.B. aus PU - beispielsweise einem thermoplastischen Polyurethanelastomer - oder aus Polyamid gebildet sein. Andere mögliche Materialien für die diffusionsarme Folie 3 sind, Polyester, Polyethylen sowie Co-Polymere aus Ethylen oder α-Olefine. Anstelle des Gewebeschlauchs kann die faserhaltige Lage 4 bei einer Abwandlung auch einem Gelege oder Gestrick oder Gewirke gebildet sein. Auch können statt Glas- oder Kohlefasern für das die Lage 4 bildende Gewebe auch Polyesterfasern verwendet werden. Eine spezielle Ausführung ergibt sich, wenn der aus dem starline^{®}EXPRESS-Verfahrens bekannte Schlauch als erste Schicht 1 verwendet wird. Eine spezielle Abwandlung des Auskleidungsschlauchs sieht vor, dass die erste Schicht 1 gebildet wird, indem die Folie 3 oberflächlich angeschmolzen wird und auf die faserhaltige Lage 4 aufkaschiert wird, die so eine Art Vlies auf der Folie 3 bilden. Die erste Schicht 1 wird dann also durch eine kaschierte Folie gebildet. Falls das genannte Harz nicht styrolfrei ist, fungiert die diffusionsarme Folie 3 insbesondere als Styrolsperre. In jedem Fall ist sie für das Harz undurchlässig.

Der Auskleidungsschlauch aus den Figuren 1 und 1A eignet sich zum Sanieren oder Rehabilitieren von Druckrohren, und zwar auch dann, wenn diese nicht nur undicht geworden sind, sondern aufgrund von Schwächungen, beispielsweise durch Korrosion, auch keine mechanische Belastung mehr aushalten können. Dazu wird der fertige Auskleidungsschlauch zu einer Baustelle transportiert, von der aus eine Öffnung des zu sanierenden Altrohrs zugänglich ist. Dort wird der Auskleidungsschlauch in das Altrohr, also in die ursprüngliche Druckrohrleitung, eingezogen und so aufgebläht, dass eine vollflächige, fugenlose Haftverbindung zwischen dem Auskleidungsschlauch und dem Altrohr hergestellt wird.

Diese Haftverbindung kann beim vorliegenden Ausführungsbeispiel durch das oberflächlich aus der zweiten Schicht 2 austretende Harz vermittelt werden. Dazu ist das Harz als Mischung aus dem zur Bildung eines selbstragenden Rohrs geeigneten Vinylesterharz oder Poyesterharz und einem Klebstoff gebildet sein, wobei als Klebstoff ein Acrylharz oder ein Epoxidharz in Frage kommt und wobei der Klebstoff unter Umständen in Form von Kügelchen - eingeschlossen z.B. in Wachshüllen - im Harz vorliegen kann. Typischerweise ist das Harz jedoch eine homogene Mischung, in der das Vinylesterharz oder das Polyesterharz einen Massenanteil von zwischen 50% und 95% ausmacht, während der durch das Acrylharz oder das Epoxidharz gebildete Klebstoff einen Massenanteil von mindestens 5% des Harzes ausmacht.

Anschließend wird eine Strahlungsquelle, z.B. eine Lichtquelle im UV- oder UV-nahen Bereich, durch den innerhalb des Altrohrs angeordneten Auskleidungsschlauch geführt, wodurch ein Aushärtungsprozess des Harzes ausgelöst wird. Der Auskleidungsschlauch bildet dadurch ein selbsttragendes Rohr oben genannter Steifigkeit, das sowohl zum Abdichten des Altrohrs dient als auch zur Wiederherstellung der Druckbelastbarkeit der Druckrohrleitung, die ursprünglich nur durch das Altrohr gebildet war. Unabhängig davon, wie belastbar das Altrohr noch war, kann die so sanierte Druckrohrleitung wieder Drücke von unter Umständen bis zu 25 bar oder sogar 50 bar aushalten.

In Fig. 2 ist eine Abwandlung des Auskleidungsschlauchs aus den Figuren 1 und 1A gezeigt. Wiederkehrende Merkmale sind hier und in den folgenden Figuren stets mit den gleichen Bezugszeichen versehen und werden nicht mehr eigens beschrieben. Der Auskleidungsschlauch aus Fig. 2 unterscheidet sich von dem vorherigen Ausführungsbeispiel nur durch eine zusätzliche Klebstoffschicht 5, die an die Stelle des im Harz der zweiten Schicht 2 selbst enthaltenen Klebstoffs treten kann, sowie dadurch, dass die zweite Schicht 2, die faserhaltige Lage 4 der ersten Schicht 1 und die diffusionsarme Folie 3 der ersten Schicht in umgekehrter Reihenfolge angeordnet sind, so dass die Folie 3 außen liegt. In dieser Form eignet sich der Auskleidungsschlauch, der dazu hinreichend flexibel ist, zum Einbringen in das Altrohr durch Reversieren. Die Sanierung eines Altrohrs geschieht mit diesem Auskleidungsschlauch in gleicher Weise wie oben beschrieben mit dem einzigen Unterschied, dass der Auskleidungsschlauch durch Reversieren, z.B. mittels einer Drucktrommel, in das zu sanierendes Druckrohr eingebracht wird. Wie ein solcher Reversionsprozess durchgeführt werden kann, ist in anderem Zusammenhang z.B. in den Druckschriften WO 00/25057 A1 und WO 00/15992 A2 beschrieben.

Die Klebstoffschicht 5, die zunächst an einer inneren Oberfläche des Auskleidungsschlauchs gebildet wird, kommt beim Reversieren mit der inneren Oberfläche des Altrohrs in Kontakt und vermittelt dadurch die vollflächige Haftverbindung mit dem Altrohr. Als Klebstoff zur Bildung der Klebstoffschicht 5 wird Acrylharz oder ein Harz auf Basis von Epoxiden, also ein Epoxidharz, verwendet. Insbesondere kann es sich dabei um den Klebstoff handeln, mit dem bei dem bekannten starline ^{®}EXPRESS-Verfahren eine Verbindung zwischen dem auskleidenden Schlauch und dem Altrohr hergestellt wird. Zur Bildung der Klebstoffschicht wird der Klebstoff in den Auskleidungsschlauch gefüllt und letzterer dann durch ein Walzenpaar gezogen, so dass der Klebstoff gleichmäßig verteilt wird, bevor der Auskleidungschlauch in das Altrohr reversiert wird. Wenn für das Harz, mit dem das textile Flächengebilde getränkt ist, eine Mischung der oben im Zusammenhang mit den Figuren 1 und 1A beschriebenen Art verwendet wird, so dass das Harz selbst hinreichend gute Klebeeigenschaften hat, kann unter Umständen auf die Klebstoffschicht 5 verzichtet werden.

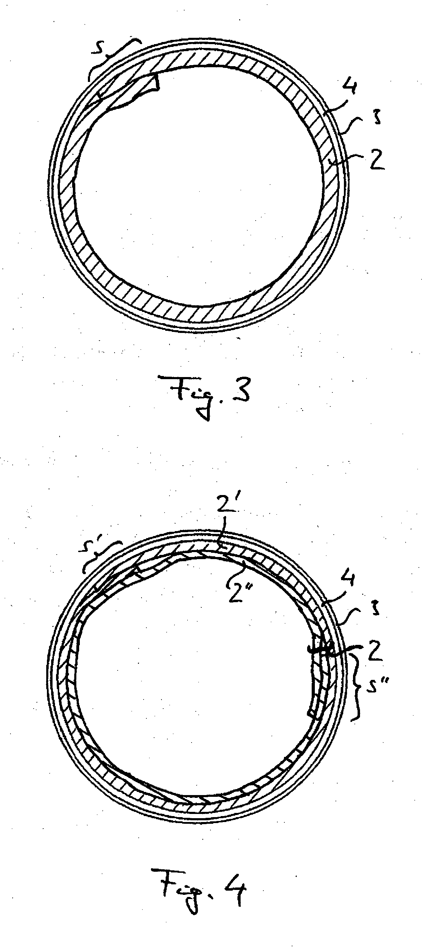

Zwei Ausführungsbeispiele für solche Auskleidungsschläuche sind, ebenfalls jeweils als Querschnitt, in den Figuren 3 und 4 gezeigt. Auch diese Auskleidungsschläuche sind im vorliegenden Fall dazu ausgelegt, durch Reversieren in das zu sanierende Altrohr eingebracht zu werden. Daher liegt auch hier die aus der Folie 3 und der faserhaltigen Lage 4 gebildete erste Schicht außen und die zweite Schicht 2 innen. Für den Aufbau der ersten Schicht gilt wieder das zur ersten Schicht 1 des Ausführungsbeispiels aus den Figuren 1 und 1A Gesagte. Das Harz, das zusammen mit dem textilen Flächengebilde die zweite Schicht 2 bildet, ist in beiden Fällen wieder eine Mischung aus mit einem Massenanteil von zwischen 50% und 95% vorliegendem ungesättigten Vinylesterharz oder Polyesterharz und einem dementsprechend mit einem Massenanteil von mindestens 5% vorliegenden Epoxidharz oder Acrylharz als Klebstoff.

In Fig. 3 ist zu erkennen, dass das textile Flächengebilde, das zusammen mit dem Harz die zweite Schicht 2 bildet, so gelegt ist, dass es sich in einem längs des Auskleidungsschlauchs verlaufenden Streifen s selbst überlappt, wobei zwei Ränder des textilen Flächengebildes dort nur übereinandergelegt, nicht jedoch miteinander vernäht sind. Dadurch können sich die zwei einander überlappenden Ränder in Umfangsrichtung gegeneinander verschieben, so dass die zweite Schicht 2 problemlos geweitet werden kann, wenn der Auskleidungsschlauch reversiert und nötigenfalls aufgeweitet wird, und zwar ohne dass das textile Flächengebilde dazu in sich gedehnt werden müsste. Bei dem textilen Flächengebilde handelt es sich unter Umständen selbst um einen Komplex aus einem aus Glasfaser gebildeten Gewebe oder Gelege und einer Textilglasmatte, wobei das Gewebe oder Gelege so orientiert ist, dass die Glasfasern teilweise in Umfangsrichtung und teilweise in Längsrichtung des Auskleidungsschlauchs liegen. Dabei ist eine hohe Belastbarkeit in Umfangsrichtung besonders wichtig, weshalb vorgesehen sein kann, dass das Gewebe oder Gelege pro Flächeneinheit mehr in Umfangsrichtung liegende Glasfasern als in Längsrichtung liegende Glasfasern aufweist.

Das Ausführungsbeispiel aus Fig. 4 unterscheidet sich von dem Auskleidungsschlauch aus Fig. 3 nur dadurch, dass das textile Flächengebilde, das zusammen mit dem Harz die zweite Schicht 2 bildet, seinserseits zwei Lagen 2' und 2" umfasst, für die jeweils das zum textilen Flächengebilde aus dem vorherigen Ausführungsbeispiel Gesagte gilt. Jede dieser Lagen 2' und 2" überlappt sich hier jeweils in einem längs des Auskleidungsschlauchs verlaufenden Streifen s' bzw. s", und zwar wieder jeweils ohne Naht. Dabei sind die Lagen 2' und 2" so gelegt, dass diese Streifen s' und s" nicht übereinander, sondern in Umfangsrichtung an verschiedenen Stellen liegen, damit das textile Flächengebilde an keiner Stelle zu dick aufträgt.

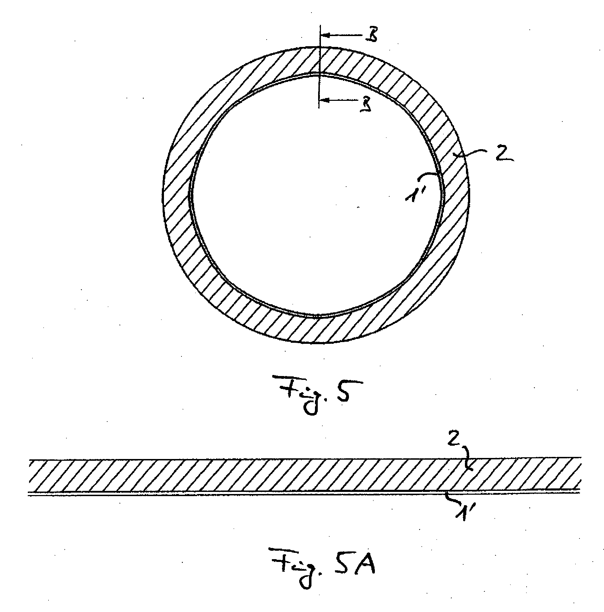

In den Figuren 5 und 5A ist eine Abwandlung der bislang beschriebenen Auskleidungschläuche gezeigt, die sich von den vorherigen Ausführungsbeispielen nur dadurch unterscheidet, dass die erste Schicht 1' hier lediglich durch eine als Diffusionssperre dienende Folie gebildet und direkt mit der zweiten Schicht 2 verbunden ist. Auch in diesem Fall kann die Verbindung zwischen der ersten Schicht 1' und der zweiten Schicht 2 durch das Harz vermittelt sein, mit dem das textile Flächengebilde der zweiten Schicht 2 getränkt ist. Auch dieser Auskleidungsschlauch kann alternativ linksherum gewendet ausgeführt werden und dann, wie der Auskleidungsschlauch aus den Figuren 2 bis 4, statt durch Einziehen durch Reversieren in das zu sanierende Altrohr eingebracht werden.

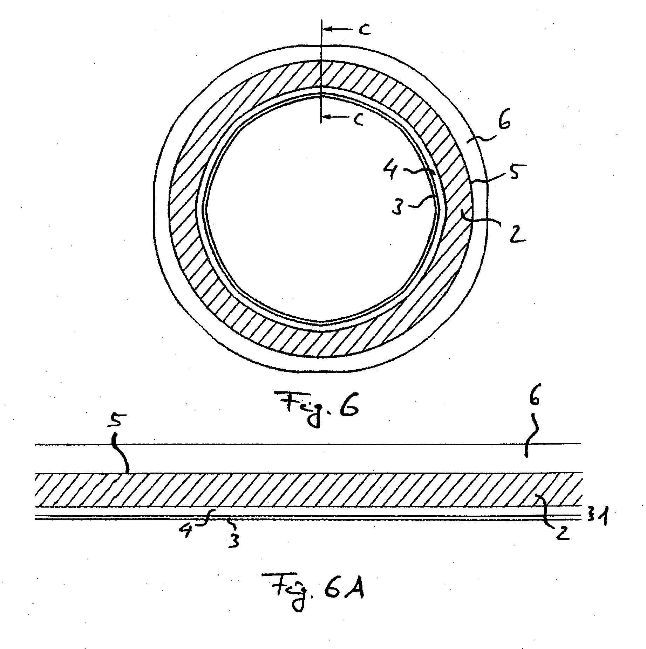

In den Figuren 6 und 6A ist ein rehabilitiertes Druckrohr gezeigt, dass sich durch das beschriebene Verfahren zum Rehabilitieren oder Sanieren eines Altrohrs 6 ergibt. Innerhalb des Altrohrs 6, das nur noch zur Formgebung benötigt wird und keine mechanischen Belastungen aushalten können muss, ist hier das selbsttragende Rohr angeordnet, dass der Auskleidungsschlauch aus den Figuren 1 und 1A oder aus einer der Figuren 2 bis 4 nach dem Aushärten des Harzes bildet. Dabei ist das genannte selbsttragende Rohr, In dem die zweite Schicht 2 als statisch wirksame Schicht fungiert, durch den Klebstoff der Klebstoffschicht 5 bzw. durch Teile des Harzes aus der zweiten Schicht 2 vollflächig und fugenlos mit der inneren Oberfläche des Altrohrs 6 verbunden. Zwischen der inneren Oberfläche des Altrohrs 6 und der zweiten Schicht 2 besteht also eine lückenlose kraftschlüssige Klebeverbindung, wodurch Gashinterwanderungen des durch den Auskleidungsschlauch gebildeten selbsttragenden Rohrs verhindert werden. Das Altrohr 6 kann einen Rohrdurchmesser von zwischen 100 mm und 2000 mm haben, vorzugsweise einen Durchmesser von zwischen 200 mm und 1200 mm. Dabei lässt sich das beschriebene Sanierungsverfahren durch Einbringen des Auskleidungschlauchs in einem einzigen Arbeitsschritt auch dann durchführen, wenn das Altrohr und dementsprechend dann auch das rehabilitierte Druckrohr Richtungsänderungen aufweist, und zwar vorteilhafter Weise in geschlossener Bauweise. Es werden daher nur wenige Reinigungs- und Reversionsbaugruben benötigt.

## Patentansprüche

1. Auskleidungsschlauch zum Auskleiden eines zu sanierenden Druckrohres, umfassend zumindest eine erste Schicht (1) und eine an die erste Schicht (1) angrenzende zweite Schicht (2), wobei die erste Schicht (1) eine fluiddichte und/oder gasdichte Diffusionssperre bildet und wobei die zweite Schicht (2) ein mit einem Harz getränktes textiles Flächengebilde ist, eine Dicke von mindestens 3 mm hat und für eine fugenlose und vollflächige kraftschlüssige Klebeverbindung mit einer Innenwand des zu sanierenden Druckrohrs eingerichtet ist, wobei der Auskleidungsschlauch in einem Zustand, in dem das Harz nicht ausgehärtet ist, flexibel ist und wobei das textile Flächengebilde und das Harz so gewählt sind, dass das textile Flächengebilde zusammen mit dem Harz einen faserverstärkten Kunststoff bildet und dass der Auskleidungsschlauch in einem Zustand, in dem das Harz ausgehärtet ist, ein selbsttragendes Rohr mit einer Nennsteifigkeit von mindestens SN 630 oder einer Nominalsteifigkeit von mindestens 630 N/m² bildet, wobei das Harz ein ungesättigtes Polyesterharz oder ein ungesättigtes Vinylesterharz ist oder enthält und wobei zusätzlich ein Acrylharz oder Epoxidharz als Klebstoff vorgesehen ist, der entweder als Klebstoffschicht (5), die in einem ausgehärteten Zustand eine klebende Verbindung zwischen dem selbsttragenden Rohr und einer Innenseite des zu sanierenden Druckrohres zu vermitteln geeignet ist, auf einer der ersten Schicht (1) abgewandten Oberfläche der zweiten Schicht (2) aufgetragen ist oder der zusammen mit dem Polyesterharz oder Vinylesterharz als Mischung das Harz bildet, mit dem das textile Flächengebilde der zweiten Schicht (2) getränkt ist.

2. Auskleidungsschlauch nach Anspruch 1, **dadurch gekennzeichnet, dass** die zur Bildung einer inneren Oberfläche des sanierten Druckrohres vorgesehene erste Schicht (1) außerhalb der zweiten Schicht (2) angeordnet ist, so dass der Auskleidungsschlauch zum Einbringen in das zu sanierende Druckrohr durch Reversieren geeignet ist.

3. Auskleidungsschlauch nach Anspruch 1, **dadurch gekennzeichnet, dass** die zur Bildung einer inneren Oberfläche des sanierten Druckrohres vorgesehene erste Schicht (1) innerhalb der zweiten Schicht (2) angeordnet ist, so dass der Auskleidungsschlauch zum Einbringen in das zu sanierende Druckrohr durch Einziehen geeignet ist.

4. Auskleidungsschlauch nach einem der Ansprüche 1 bis 3, **dadurch gekennzeichnet, dass** das Harz, mit dem das textile Flächengebilde getränkt ist, ein Eindickungsmittel enthält und so eingedickt ist, dass es bei 20°C eine Viskosität von zwischen 100000 mPas und 500000 mPas hat.

5. Auskleidungsschlauch nach einem der Ansprüche 1 bis 4, **dadurch gekennzeichnet, dass** das Harz so gewählt ist, dass es im ausgehärteten Zustand eine klebende Verbindung zwischen dem selbsttragenden Rohr und einer Innenseite des zu sanierenden Druckrohres zu vermitteln geeignet ist.

6. Auskleidungsschlauch nach einem der Ansprüche 1 bis 5, **dadurch gekennzeichnet, dass** die erste Schicht (1) für das Harz undurchlässig ist oder eine für das Harz undurchlässige Lage umfasst.

7. Auskleidungsschlauch nach einem der Ansprüche 1 bis 6, **dadurch gekennzeichnet, dass** die erste Schicht (1) durch einen Verbund gebildet ist, der eine diffusionsarme Folie (3) sowie an einer der zweiten Schicht (2) zugewandten Seite der Folie (3) eine faserhaltige Lage (4) umfasst.

8. Auskleidungsschlauch nach einem der Ansprüche 1 bis 7, **dadurch gekennzeichnet, dass** die erste Schicht (1) durch das Harz mit der zweiten Schicht (2) verbunden ist.

9. Auskleidungsschlauch nach einem der Ansprüche 1 bis 8, **dadurch gekennzeichnet, dass** das Harz ein durch UV-Strahlung oder andere elektromagnetische Strahlung härtbares Harz ist.

10. Auskleidungsschlauch nach einem der Ansprüche 1 bis 9, **dadurch gekennzeichnet, dass** das textile Flächengebildet aus Glasfasern oder Kohlefasern oder Fasern aus PET gebildet ist.

11. Auskleidungsschlauch nach einem der Ansprüche 1 bis 10, **dadurch gekennzeichnet, dass** das Harz styrolfrei ist.

12. Rehabilitiertes Druckrohr, umfassend ein Altrohr (6) sowie ein innerhalb des Altrohrs (6) angeordnetes und durch eine vollflächige Klebeverbindung mit einer Innenwand des Altrohrs (6) verbundenes selbsttragendes Rohr, wobei das selbsttragende Rohr aus einem Auskleidungsschlauch nach einem der Ansprüche 1 bis 11 gebildet ist.

13. Verfahren zum Rehabilitieren eines Druckrohrs unter Verwendung eines Auskleidungsschlauchs nach einem der Ansprüche 1 bis 11, wobei das Verfahren folgende Schritte umfasst:
- Einbringen des Auskleidungsschlauchs in ein Altrohr (6) in einem einzigen Arbeitsgang,
- Herstellen einer Haftverbindung zwischen dem Auskleidungsschlauch und einer Innenwand des Altrohrs (6),
- Aushärten des Harzes, so dass der Auskleidungsschlauch ein vollflächig klebend mit dem Altrohr (6) verbundenes selbstragendes Rohr bildet.

14. Verfahren nach Anspruch 13, **dadurch gekennzeichnet, dass** das Harz beim Tränken des textilen Flächengebildes eine Viskosität von zwischen 600 mPas und 25000 mPas aufweist.

15. Verfahren nach einem der Ansprüche 13 oder 14, **dadurch gekennzeichnet, dass** das Harz ein Eindickungsmittel enthält, so dass es nach dem Tränken des textilen Flächengebildes auf eine Viskosität von zwischen 100000 mPas und 500000 mPas eindickt.

## Claims

1. A lining hose for lining a pressure pipe to be renovated, comprising at least one first layer (1) and a second layer (2) which is adjacent the first layer (1), wherein the first layer (1) forms a fluid-tight and/or gas-tight diffusion barrier and wherein the second layer (2) is a textile sheet formation which is impregnated with a resin, has a thickness of at least 3 mm and is configured for a gapless and full-surfaced, non-positive bonding connection to an inner wall of the pressure pipe to be renovated, wherein the lining hose is flexible in a condition in which the resin is not cured and wherein the textile sheet formation and the resin are selected such that the textile sheet formation together with the resin forms a fibre-reinforced plastic and that the lining hose forms a self supporting pipe with a rated stiffness at least SN630 or a nominal stiffness of at least 630 N/m² in a condition in which the resin is cured, wherein the resin is or contains an unsaturated polyester resin or an unsaturated vinyl ester resin and wherein an acrylic resin or epoxy resin is additionally provided as an adhesive, which either as an adhesive layer (5) which in a cured condition is suitable for creating a bonding connection between the self-supporting pipe and an inner side of the pressure-pipe to be renovated, is deposited on a surface of the second layer (2) which is away from the first layer (1), or which together with the polyester resin or vinyl ester resin as a mixture forms the resin, with which the textile sheet formation of the second layer (2) in impregnated.

2. A lining hose according to claim 1, **characterised in that** the first layer (1) which is provided for forming an inner surface of the renovated pressure pipe is arranged outside the second layer (2), so that the lining hose by way of reversing is suitable for incorporation into the pressure pipe to be renovated.

3. A lining hose according to claims 1, **characterised in that** the first layer (1) which is provided for forming an inner surface of the renovated pressure pipe is arranged within the second layer (2), so that the lining hose by way of drawing in is suitable for incorporating into the pressure pipe to be renovated.

4. A lining hose according to claims 1 to 3, **characterised in that** the resin, with which the textile sheet formation is impregnated, comprises a thickening agent and is thickened such that it has a viscosity of between 100000 mPas and 500000 mPas at 20°C.

5. A lining hose according to one of the claims 1 to 4, **characterised in that** the resin is selected such that in the cured condition it is suitable for creating a bonding connection between the self-supporting pipe and an inner side of the pressure pipe to be renovated.

6. A lining hose according to one of the claims 1 to 5, **characterised in that** the first layer (1) is impermeable to the resin or comprises a ply which is impermeable to the resin.

7. A lining hose according to one of the claims 1 to 6, **characterised in that** the first layer (1) is formed by a composite which comprises a low-diffusion film (3), as well as a fibre-containing ply (4) on a side of the film (3) which faces the second layer (2).

8. A lining hose according to one of the claims 1 to 7, **characterised in that** the first layer (1) is connected to the second layer (2) by way of the resin.

9. A lining hose according to one of the claims 1 to 8, **characterised in that** the resin is a resin which can be cured by way of UV radiation or other electromagnetic radiation.

10. A lining hose according to one of the claims 1 to 9, **characterised in that** the textile sheet formation is formed from glass fibres or carbon fibres or fibres of PES or PET.

11. A lining hose according to one of the claims 1 to 10, **characterised in that** the resin is styrene-free.

12. A renovated pressure pipe, comprising an old pipe (6) as well as a self-supporting pipe which is arranged within the old pipe (6) and is connected to an inner wall of the old pipe (6) by way of a complete-surfaced bonding connection, wherein the self-supporting pipe is formed from a lining hose according to one of the claims 1 to 11.

13. A method for renovating a pressure pipe amid the use of a lining hose according to one of the claims 1 to 11, wherein the method comprises the following steps:
- incorporating the lining hose into an old pipe (6) in a single working step,
- creating a bonding connection between the lining hose and an inner wall of the old pipe (6),
- curing the resin, so that the lining hose forms a self-supporting pipe which is connected to the old pipe (6) in a bonding manner over the whole surface.

14. A method according to claim 13, **characterised in that** the resin on impregnating the textile sheet formation has a viscosity of between 600 mPas and 25000 mPas.

15. A method according to one of the claims 13 or 14, **characterised in that** the resin comprises a thickening agent, so that after the impregnating of the textile sheet formation it thickens to a viscosity of between 100000 mPas and 500000 mPas.

## Revendications

1. Tuyau flexible de revêtement pour revêtir un tuyau sous pression à rénover, comprenant au moins une première couche (1) et une deuxième couche (2) contiguë à la première couche (1), la première couche (1) formant une barrière de diffusion étanche aux fluides et/ou étanche aux gaz, et la deuxième couche (2) étant une structure bidimensionnelle textile imprégnée d'une résine, ayant une épaisseur d'au moins 3 mm, et conçue pour un assemblage collé avec une paroi intérieure du tuyau sous pression à rénover, à liaison dynamique, sans joints et en pleine surface, le tuyau flexible de revêtement étant flexible, dans un état dans lequel la résine n'est pas durcie, et la structure bidimensionnelle textile et la résine étant choisies de telle sorte que la structure bidimensionnelle textile forme avec la résine un plastique renforcé par des fibres, et que le tuyau flexible de revêtement, dans un état dans lequel la résine est durcie, forme un tuyau autoportant, ayant une rigidité nominale d'au moins SN 630 ou une rigidité nominale d'au moins 630 N/m², la résine étant ou comprenant une résine insaturée de polyester ou une résine insaturée de l'ester vinylique, et en outre une résine acrylique ou une résine époxyde étant prévue en tant qu'adhésif, résine qui, soit, en tant que couche adhésive (5) qui est apte à réaliser dans un état durci un assemblage collé entre le tuyau autoportant et la face intérieure du tuyau sous pression à rénover, est appliquée sur une surface de la deuxième couche (2) opposée à la première couche (1), soit, mélangée à la résine de polyester ou à la résine d'ester vinylique, forme la résine dont la structure bidimensionnelle textile de la deuxième couche (2) est imprégnée.

2. Tuyau flexible de revêtement selon la revendication 1, **caractérisé en ce que** la première couche (1), prévue pour former une surface intérieure du tuyau sous pression rénové, est disposée à l'extérieur de la deuxième couche (2) de telle sorte que le tuyau flexible de revêtement convienne à une insertion, par renversement, dans le tuyau sous pression à rénover.

3. Tuyau flexible de revêtement selon la revendication 1, **caractérisé en ce que** la première couche (1) prévue pour la formation d'une surface intérieure du tuyau sous pression rénové est disposée à l'intérieur de la deuxième couche (2) de telle sorte que le tuyau flexible de revêtement convienne à une insertion, par enfoncement, dans le tuyau sous pression à rénover.

4. Tuyau flexible de revêtement selon l'une des revendications 1 à 3, **caractérisé en ce que** la résine dont est imprégnée la structure bidimensionnelle textile contient un épaississant et est épaissie de façon à présenter à 20°C une viscosité comprise entre 100 000 mPa.s et 500 000 mPa.s.

5. Tuyau flexible de revêtement selon l'une des revendications 1 à 4, **caractérisé en ce que** la résine est choisie de telle sorte qu'elle convienne, à l'état durci, à la création d'un assemblage collé entre le tuyau autoportant et une face intérieure du tuyau sous pression à rénover.

6. Tuyau flexible de revêtement selon l'une des revendications 1 à 5, **caractérisé en ce que** la première couche (1) est imperméable à la résine, ou comprend une nappe imperméable à la résine.

7. Tuyau flexible de revêtement selon l'une des revendications 1 à 6, **caractérisé en ce que** la première couche (1) est formée d'un composite, qui comprend une feuille à faible diffusion (3), ainsi que, sur un côté de la feuille (3) en regard de la deuxième couche (2), une nappe (4) contenant des fibres.

8. Tuyau flexible de revêtement selon l'une des revendications 1 à 7, **caractérisé en ce que** la première couche (1) est assemblée par la résine à la deuxième couche (2).

9. Tuyau flexible de revêtement selon l'une des revendications 1 à 8, **caractérisé en ce que** la résine est une résine pouvant durcir sous l'effet d'un rayonnement UV ou d'un autre rayonnement électromagnétique.

10. Tuyau flexible de revêtement selon l'une des revendications 1 à 9, **caractérisé en ce que** la structure bidimensionnelle textile est formée de fibres de verre ou de fibres de carbone ou de fibres de PET.

11. Tuyau flexible de revêtement selon l'une des revendications 1 à 10, **caractérisé en ce que** la résine est exempte de styrène.

12. Tuyau sous pression réhabilité, comprenant un vieux tuyau (6), ainsi qu'un tuyau autoportant, disposé à l'intérieur du vieux tuyau (6) et assemblé par un assemblage collé en pleine surface à une paroi intérieure du vieux tuyau (6), le tuyau autoportant étant formé d'un tuyau flexible de revêtement selon l'une des revendications 1 à 11.

13. Procédé de réhabilitation d'un tuyau sous pression par utilisation d'un tuyau flexible de revêtement selon l'une des revendications 1 à 11, le procédé comprenant les étapes suivantes :
- insertion du tuyau flexible de revêtement dans un vieux tuyau (6) en une seule passe,
- fabrication d'un assemblage par adhérence entre le tuyau flexible de revêtement et une paroi intérieure du vieux tuyau (6),
- durcissement de la résine de telle sorte que le tuyau flexible de revêtement forme un tuyau autoportant, assemblé par collage en pleine surface au vieux tuyau (6).

14. Procédé selon la revendication 13, **caractérisé en ce que** la résine présente lors de l'imprégnation de la structure bidimensionnelle textile une viscosité comprise entre 600 mPa.s et 25 000 mPa.s.

15. Procédé selon l'une des revendications 13 ou 14, **caractérisé en ce que** la résine contient un épaississant de telle sorte que, après imprégnation de la structure bidimensionnelle textile, elle soit épaissie à une viscosité comprise entre 100 000 mPa.s et 500 000 mPa.s.
